Europäisches Patentamt

European Patent Office

Office européen des brevets

(19)

(11) Veröffentlichungsnummer : **0 537 587 B1**

(12) **EUROPÄISCHE PATENTSCHRIFT**

(45) Veröffentlichungstag der Patentschrift :
17.05.95 Patentblatt 95/20

(51) Int. Cl.⁶ : **H04L 25/03,** H04L 27/01,
H04L 27/38

(21) Anmeldenummer : 92116989.2

(22) Anmeldetag : 05.10.92

(54) **Verfahren zur Bestimmung der Koeffizienten eines Entzerrers bei QAM Signalübertragung.**

(30) Priorität : 16.10.91 DE 4134206

(43) Veröffentlichungstag der Anmeldung :
21.04.93 Patentblatt 93/16

(45) Bekanntmachung des Hinweises auf die
Patenterteilung :
17.05.95 Patentblatt 95/20

(84) Benannte Vertragsstaaten :
FR IT NL SE

(56) Entgegenhaltungen :
IEEE INTERNATIONAL CONFERENCE ON
COMMUNICATIONS - ICC'89, 11-14 JUNE
1989, BOSTON, MA, US Bd. 2 Seiten 1037 -
1042 BELLEC M. ET AL.: 'DESIGN OF ROBUST
ADAPTIVE EQUALIZERS FOR DIGITAL RADIO
SYSTEMS'
IEEE INTERNATIONAL CONFERENCE ON
COMMUNICATIONS - ICC'84, 14-17 MAY 1984,
AMSTERDAM, NL Bd. 2 Seiten 1003 - 1006
AOKI K. ET AL.: 'THE ADAPTIVE TRANSVER-
SAL EQUALIZER FOR 90MBPS 64-QAM RADIO
RELAY SYSTEM'
(73) Patentinhaber : **ANT Nachrichtentechnik
GmbH
Gerberstrasse 33
D-71522 Backnang (DE)**

(72) Erfinder : **Herbig, Peter, Dipl.-Ing.
Potsdamer Ring 32
W-7150 Backnang (DE)**

EP 0 537 587 B1

## Beschreibung

Die vorliegende Erfindung betrifft ein verfahren, nach dem bei einer Übertragung eines quadraturamplitudenmodulierten Signals (QAM-Signal), solange die Trägerfrequenz eines QAM-Empfängers noch nicht auf die Trägerfrequenz des QAM-Empfängersignals eingerastet ist, die Koeffizienten eines zum Empfänger gehörenden Entzerrers bestimmt werden, indem jeder i-te (i=...-2, -1, 0, 1, 2,...) Koeffizient aus seinem zeitlich vorhergehenden Wert durch Überlagerung mit einem Korrekturwert gebildet wird, wobei das Vorzeichen des Korrekturwertes aus dem Produkt des Vorzeichens des von einem Entscheider geschätzten am wahrscheinlichsten gesendeten Signalwertes und des Vorzeichens des vom Entscheider ermittelten Schätzfehlers gebildet wird, der die Ablage des tatsächlich empfangenen Signalwertes von dem geschätzten gesendeten Signalwert wiedergibt.

Bei der Übertragung quadraturamplitudenmodulierter Datensignale (im folgenden kurz als QAM-Signale bezeichnet) über Kanäle mit selektiven Schwunderscheinungen, zum Beispiel Sichtrichtfunkverbindungen, müssen adaptive Entzerrer eingesetzt werden, welche die durch die Kanaldispersion entstandenen Intersymbolinterferenzen soweit wie möglich reduzieren. So werden wie aus Townsend, A.A.R.: 'Digital Line-of-Sight Radio Links', A Handbook, Prentice Hall International (UK) Ltd. 1988, S. 280-287 bekannt ist zur breitbandigen Richtfunkübertragung einfach abgetastete Transversalentzerrer, eventuell auch mit zusätzlichen Rückkoppelungskoeffizienten, verwendet.

Da die Kanalverzerrung stark zeitabhängig ist und sich während der Schwundereignisse permanent ändert, müssen mit speziellen Adaptionsverfahren die Entzerrerkoeffizienten laufend nachjustiert und an den Übertragungskanal angepaßt werden. Hierbei gibt es zwei verschiedene Betriebszustände zu berücksichtigen:

Im sogenannten "Tracking Mode" ist die Trägerfrequenz des QAM-Empfängers auf die Trägerfrequenz des QAM-Empfangssignals eingerastet. Die Koeffizienten nehmen ihre Optimalwerte ein und das Adaptionsverfahren hat hier lediglich die Aufgabe, die Koeffizienten entsprechend den Änderungen des Übertragungskanals zu korrigieren.

Bei einem in der obengenannten Literaturstelle beschriebenen Adaptionsverfahren, das "zero-forcing" (ZF) genannt wird, werden die Entzerrerkoeffizienten proportional zum Produkt des von einem Entscheider geschätzten am wahrscheinlichsten gesendeten Signalwertes und des vom Entscheider ermittelten Schätzfehlers verstellt.

Eine Variante dieses Verfahrens, das hier als "signum zero-forcing" (SZF) bezeichnet wird, besteht darin, daß nur die Vorzeichen des geschätzten Signalwertes und des Schätzfehlers für die Adaption der Koeffizienten ausgewertet werden.

"Acquisition Mode" nennt man den Betriebszustand, in welchem der QAM-Empfänger noch nicht auf die Frequenz des Empfangssignals eingerastet ist sowie die zur optimalen Kanalentzerrung notwendigen Entzerrerkoeffizienten noch nicht bekannt sind, beispielsweise zu Beginn einer Signalübertragung oder nach einem Systemausfall. Da eine Regelschleife zur Ableitung des Empfangssignalträgers nur dann einrasten kann, wenn die Signalverzerrung ein gewisses Maß nicht übersteigt, muß das Adaptionsverfahren auch in diesem Betriebszustand des Empfängers in der Lage sein, die optimalen Entzerrerkoeffizienten zu finden.

Das in der genannten Literaturstelle beschriebene Adaptionsverfahren ist auch im "Acquisition Mode" bei niederwertigen QAM-Systemen (4-QAM, 16-QAM, 64-QAM) in der Lage die optimalen Entzerrerkoeffizienten zu finden. Das gilt auch für das aus Aoki, K. et. al: 'The Adaptive Transversal Equalizer for 90 Mbit/s 64-QAM Radio Relay System', IEEE Int. Conf. on Comm. ICC 1984, S. 1003-1006 hervorgehende "Maximum Level Error" (MLE) Verfahren.

Bei höherwertigen QAM-Systemen sind diese bekannten Verfahren aber nicht mehr in der Lage, im "Acquisition Mode" die optimalen Entzerrerkoeffizienten zu finden.

Ein Verfahren der eingangs genannten Art anzugeben, welches im "Acquisition Mode" insbesondere bei höherwertigen QAM-Systemen in der Lage ist, die optimalen Entzerrerkoeffizienten zu adaptieren, ist Aufgabe der vorliegenden Erfindung.

Erfindungsgemäß wird diese Aufgabe durch die Merkmale des Patentanspruchs 1 gelöst. Vorteilhafte Ausführungen der Erfindung gehen aus den Unteransprüchen hervor.

Anhand eines in der Zeichnung dargestellten Ausführungsbeispiels wird nun die Erfindung näher erläutert. Es zeigen:

Fig. 1 einen Transversalentzerrer,

Fig. 2 die Ebene der komplexen Signalwerte eines M-QAM-Systems mit den nach dem SZF-Verfahren verwendeten Vorzeichen der Schätzfehler.

Fig. 3 die Ebene der komplexen Signalwerte eines M-QAM-Systems mit den nach dem MLE-Verfahren verwendeten Vorzeichen der Schätzfehler,

Fig. 4 einen Ausschnitt der Ebene der komplexen Signalwerte eines 256-QAM-Systems mit den nach dem erfundenen Verfahren verwendeten Vorzeichen der Schätzfehler,
Fig.5 Blockschema einer nach dem erfindungsgemäßen Verfahren arbeitenden Schaltungsanordnung,
Fig.6 ein Entscheider
Fig.7 ein erster Korrelator für die Nebenkoeffizienten des Entzerrers und
Fig.8 ein zweiter Korrelator für den Hauptkoeffizienten des Entzerrers.

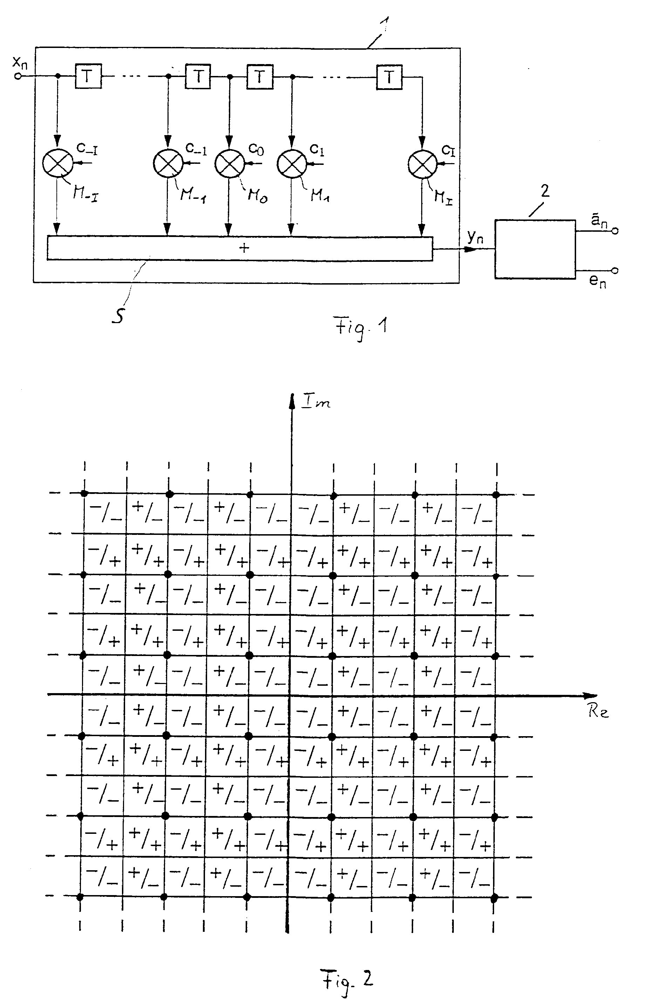

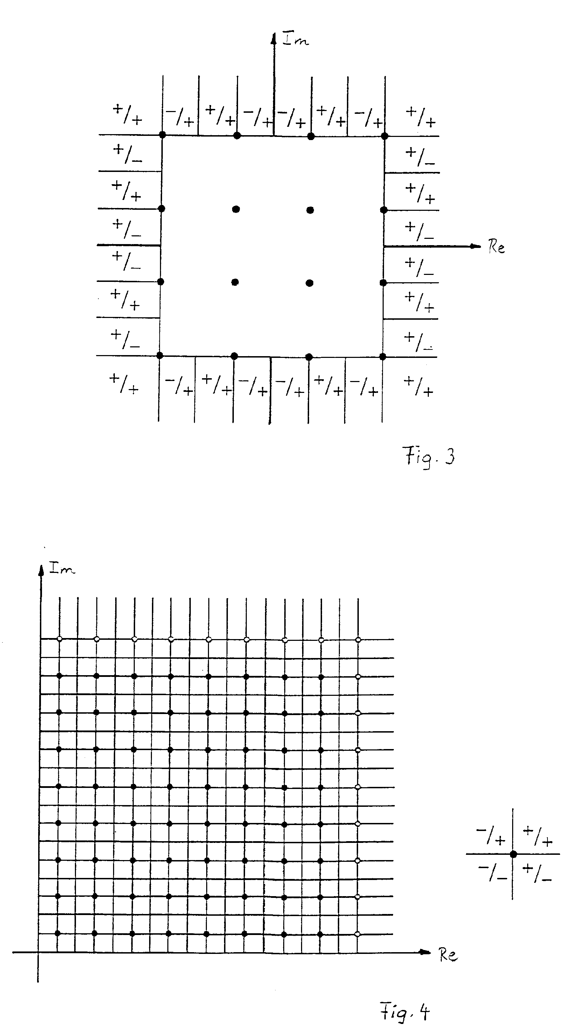

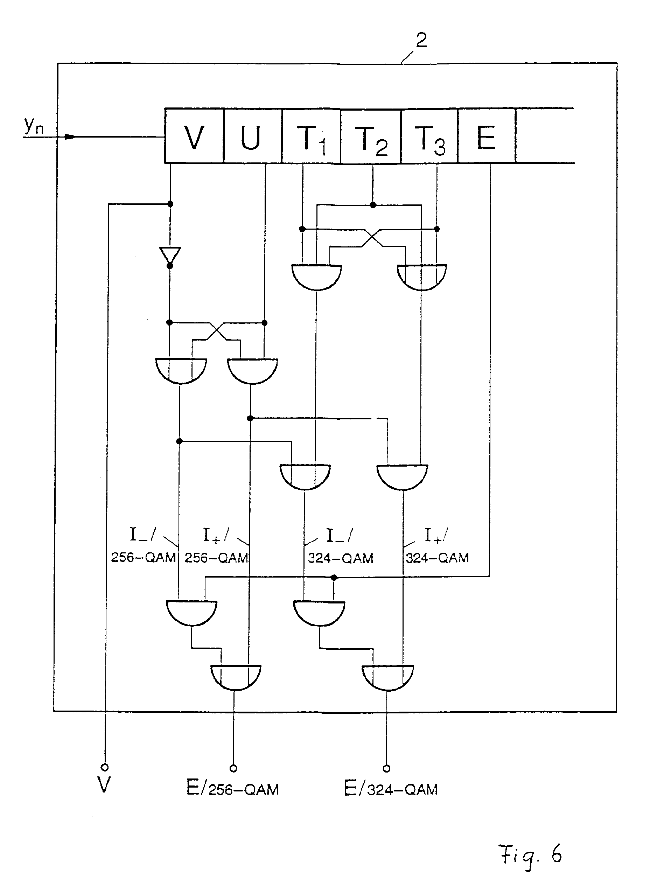

Der Entzerrer, auf den das nachfolgend beschriebene Verfahren angewendet wird, sei beispielsweise ein üblicher Transversalentzerrer 1 wie ihn die Fig. 1 zeigt. Am Eingang des Entzerrers 1 liegt ein QAM-Empfangs-signal $X_n$, des in einer Kette von Laufzeitgliedern mit der Laufzeit T, wobei T der Sendetakt ist, verzögert wird. Von Multiplizierern $M_{-l}$ ... $M_l$ werden die verzögerten Signalkomponenten des Eingangssignals $X_n$ mit Koeffizienten $c_i$ mit $i = -l$ .... $l$ gewichtet bevor ein Summierer S alle verzögerten Signalkomponenten zu dem entzerrten Ausgangssignal $y_n$ zusammenfaßt. Der Koeffizient $c_i$ mit $i = 0$ wird Hauptkoeffizient (in der englischsprachigen Literatur "reference tap") und alle anderen Koeffizienten werden Nebenkoeffizienten genannt. Ein dem Entzerrer 1 nachgeschalteter Entscheider 2 ordnet jedem Signalwert $y_n$ des Entzerrerausgangssignals denjenigen Signalwert $\tilde{a}_n$ zu, der von allen möglichen QAM-Signalwerten am wahrscheinlichsten angewendet worden ist. Ebenso bestimmt der Entscheider 2 einen Schätzfehler - im folgenden als Fehlersignal bezeichnet -

$$e_n = y_n - \tilde{a}_n \quad (1)$$

der die Ablage des tatsächlich empfangenen Signalwertes $y_n$ von dem geschätzten gesendeten Signalwert $\tilde{a}_n$ angibt.

Wie gesagt, ist jeder Signalwert $\tilde{a}_n$ ein Element aus der Menge aller möglichen QAM-Sendesignalwerte. Da QAM ein zweidimensionales Modulationssystem ist, sind alle hier genannten Größen komplexwertig und besitzen einen Real- und einen Imaginärteil. Der komplette Entzerrer besteht deshalb aus vier Teilentzerrern und zwei Entscheidern, die in einer Kreuzstruktur verschaltet werden müssen, so wie in der einleitend erwähnten Druckschrift von A.A.R. Townsend beschrieben.

Bei dem dieser Druckschrift zu entnehmende "zero-forcing" Verfahren - im folgenden ZF Verfahren genannt - ist der Korrekturwert für den Entzerrerkoeffizienten $c_i$ proportional dem Produkt

$$e_n^* \cdot \tilde{a}_{n-i} \quad (2)$$

wobei $e_n^*$ der konjugiert komplexe Wert von $e_n$ ist.

Bei A.A.R. Townsend wird für den Korrekturwert nur noch das Vorzeichen aus (2) bestimmt. Dieses Verfahren wird im folgenden "signum-zero-forcing" oder kurz SZF Verfahren genannt. Das hierbei verwendete Produkt ergibt sich aus

$$\text{sign}(e_n^*) \cdot \text{sign}(\tilde{a}_{n-i}) \quad (3)$$

sign (...) soll hier eine komplexe Operation mit Signumsbildung des Real- und des Imaginärteils der Größen $e_n^*$ und $\tilde{a}_{n-i}$ sein.

Zu Beginn des "Acquisition Mode" Betriebes werden die Entzerrerkoeffizienten $c_i$ mit neutralen Startwerten initialisiert und dann frei adaptiert. Die neutralen Startwerte sind

$$c_i = 0 \text{ für } i \neq 0 \text{ und } c_0 = 1.$$

Beim bekannten SZF-Verfahren werden Vorzeichen der Schätzfehler $e_n$ zugrundegelegt, wie sie in der komplexen QAM-Signalwertebene gemäß Fig. 2 eingetragen sind. Die Punkte symbolisieren die Signalwerte $a_n$, und von den zwei in jedem der um die Punkte herum angeordneten Entscheidungsfehler angegebenen Vorzeichen ist eins das Vorzeichen des Realteils und eins das Vorzeichen des Imaginärteils des Fehlersignals $e_n$.

Das in Fig. 2 für ein M-QAM-System ($M \to \infty$) angegebene Vorzeichenmuster des Fehlersignals führt im "Tracking Mode" Betrieb zu einer völlig ausreichenden Adaption der Entzerrer koeffizienten. Das trifft aber nicht für den "Acquisition Mode" Betrieb zu.

Fig. 3 gibt ein Vorzeichenmuster des Schätzfehlers wieder, das in dem eingangs erwähnten MLE Verfahren verwendet wird. Aber auch hier hat sich herausgestellt, daß für höherwertige QAM-Systeme im "Acquisition Mode" Betrieb die Entzerrerkoeffizienten nur mangelhaft adaptiert werden.

In einem 256-QAM System bleiben sowohl beim SZF- als auch beim MLE Verfahren die Koeffizienten selbst dann nicht stabil, wenn man sie künstlich auf ihre Optimalwerte setzt, bevor sie frei adaptiert werden.

Ursache für dieses Fehlverhalten ist eine Störung im Korrektursignal für den Hauptkoeffizienten $c_0$ des Entzerrers.

Die Störung kommt dadurch zustande, daß der Empfängeroszillator noch nicht auf die Trägerfrequenz des QAM-Empfangssignals eingerastet ist und deshalb die Empfangssignalwerte auf Kreisen um den Ursprung der komplexen QAM-Signalwertebene rotieren. Diejenigen Signalwerte, welche bei der Rotation innerhalb des Quadrats der QAM-Signalwertebene verbleiben, führen im Mittel zu einer Korrekturinformation, welche den Hauptkoeffizienten vergrößert, und diejenigen Signalwerte, die bei der Rotation Gebiete außerhalb des QAM-Quadrates treffen können, führen zu einer Korrekturinformation, welche den Hauptkoeffizienten verkleinert. Welcher dieser beiden Effekte überwiegt, ist von der genauen Verteilung der Signalwerte in der komplexen QAM-Signalwertebene und damit vom genauen QAM-System abhängig. Bei 16- und 64-QAM überwiegt der Anteil der inneren Signalwerte. Der Hauptkoeffizient wird somit vergrößert, was bei vorhandenen Kanalverzerrungen aber gerade wünschenswert ist. Bei 256-QAM und bei allen höherstufigeren QAM-Systemen überwiegt jedoch der Anteil der äußeren Signalwerte, wodurch der Hauptkoeffizient durch das SZF Verfahren solange zurückgeregelt wird, bis die Korrekturinformation im Mittel verschwindet. Der Hauptkoeffizient ist dann aber zu klein, so daß bei nennenswerten Kanalverzerrungen überhaupt keine erfolgreiche Adaption mehr möglich ist.

Durch den hier beschriebenen Rotationseffekt wird dem Empfänger quasi ein zu großer Empfangspegel vorgetäuscht, der dann zwangsläufig in einem zu kleinen Wert des Hauptkoeffizienten resultiert. Dieser Effekt, der im Prinzip bei allen QAM-Modulationen in Erscheinung tritt, führt allerdings bei den QAM-Modulationen mit nur wenigen Signalwerten (16-QAM und 64-QAM) infolge der groben Aufteilung der komplexen Signalwertebene in die einzelnen Entscheidergebiete noch nicht zu Funktionsstörungen.

Das nachfolgend beschriebene Verfahren ermöglicht auch für 256-QAM und noch höherwertige QAM-Systeme eine optimale Adaption der Entzerrerkoeffizienten im "Acquisition Mode" Betrieb.

Für die Adaption der Nebenkoeffizienten $c_i$ ($i \neq 0$) wird auf bekannte Verfahren z.B. das SZF-Verfahren zurückgegriffen. Bei der Adaption des Hauptkoeffizienten $c_o$ wird zur Bildung des forderlichen Fehlersignals $e_n$ im Empfänger von einer größeren Signalwertmenge ausgegangen als sendeseitig vorgegeben ist.

So wird z.B. bei 256-QAM der Hauptkoeffizient nicht mit dem Fehlersignal $e_n$/256-QAM, sondern mit dem Fehlersignal $e_n$/324-QAM adaptiert.

Dies reduziert den Flächenanteil äußerer Gebiete, den Signalwerte aus dem Inneren der QAM-Signalwertebene bei Signalrotation treffen könnten und verhindert so die Vortäuschung eines zu hohen Empfangspegels.

Die Fig. 4 zeigt einen Quadranten der komplexen 256-QAM-Signalwertebene, die durch Hinzufügen einer Signalwertreihe (Punkte °) an allen Rändern zu einer 324-QAM-Signalwertebene erweitert worden ist. Die Vorzeichen des Real- und des Imaginärteils des Fehlersignals $e_n$, wie sie um jeden Punkt in der komplexen QAM-Signalwertebene verteilt sind, gehen ebenfalls aus Fig. 4 hervor.

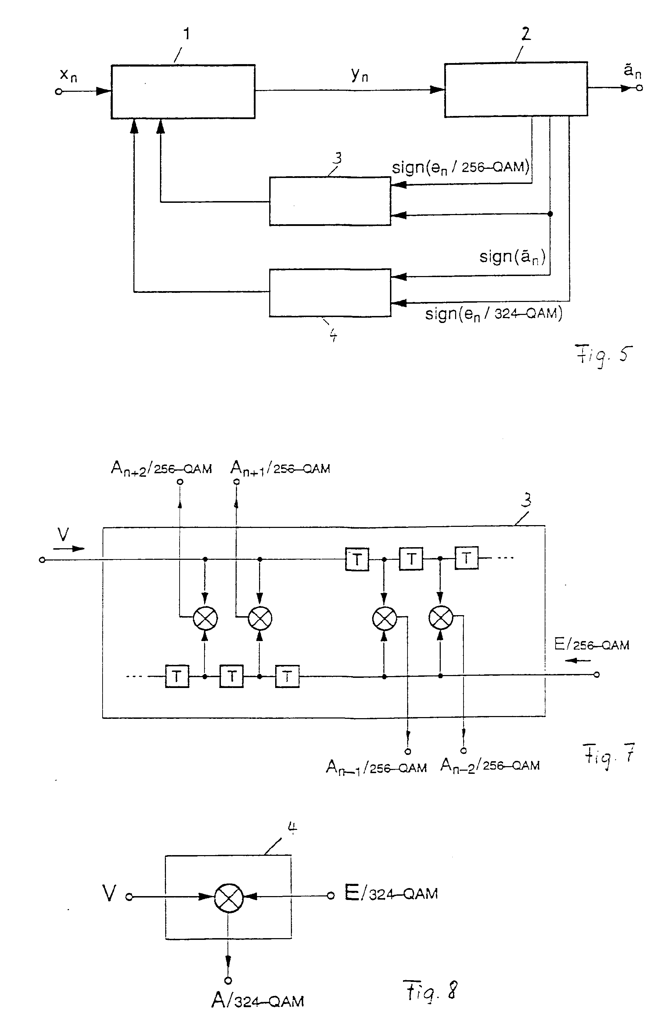

Ein Blockschaltbild einer Schaltungsanordnung zur Adaption der Koeffizienten eines Entzerrers 1 bei z.B. 256-QAM ist der Fig. 5 zu entnehmen. Wie dargestellt, muß der Entscheider 2 das Vorzeichen sign ($\tilde{a}_n$) des jeweils geschätzten am wahrscheinlichsten gesendeten Signalwertes $\tilde{a}_n$, zur Adaption der Entzerrernebenkoeffizienten das Vorzeichen sign ($e_n$/256-QAM) des Fehlersignals bei 256-QAM sowie zur Adaption des Hauptkoeffizienten das Vorzeichen sign (en/324-QAM) des Fehlersignals bei 324-QAM ermitteln.

In den beiden Korrelatoren 3 und 4 werden die der Gleichung (3) zugrundeliegenden Vorzeichenprodukte gebildet und entsprechende Korrekturwerte für die Entzerrerkoeffizienten $c_i$ ($i = -I...0...I$) bereitgestellt.

Jeder Koeffizient $c_i(n+1)$ zum Zeitpunkt $n+1$ ergibt sich aus dem Koeffizienten $c_i(n)$ des vorhergehenden Zeittaktes durch Überlagerung eines Korrekturwertes gemäß folgender Vorschrift:

$$c_i(n + 1) = c_i(n) - \alpha \,\text{sign}(e_n^*/M^2 - \text{QAM}) \cdot \text{sign}(\tilde{a}_{n-i}) \text{ für } i \neq 0, \quad (4)$$

$$c_0(n + 1) = c_0(n) - \alpha \,\text{sign}(e_n^*/(M + N)^2 - \text{QAM}) \cdot \text{sign}(\tilde{a}_n). \quad (5)$$

Im vorliegenden Ausführungsbeispiel ist $M^2 = 256$ und $(M+N)^2 = 324$. Das Verfahren kann auch auf noch höherstufige QAM-Systeme angewendet werden. Auf jeden Fall ist $N (=2, 4, 6...)$ so zu wählen, daß der mittlere Korrekturwert für den Hauptkoeffizienten gerade nicht negativ wird. Wird N nämlich zu groß gewählt, so wächst der Hauptkoeffizient zu stark und verhindert eine erfolgreiche Adaption.

In den Gleichungen (4), (5) ist $\alpha$ ($\ll 1$) ein Verstellschrittfaktor, mit dem die Adaptionsgeschwindigkeit variiert werden kann.

Ein Ausführungsbeispiel für einen aus Binärlogikelementen aufgebauten Entscheider 2, der die Vorzeichen sign($a_n$), sign ($e_n$/256-QAM) sowie sign ($e_n$/324-QAM) berechnet, zeigt die Fig. 6. Oben im Bild sind die höherwertigen Binärstellen des Entscheidereingangssignals $y_n$ dargestellt, wofür im weiteren 2er-Komplementdarstellung unterstellt wird ($-1 = 111..11$, $0 = 000..00$, $+1 = 000..01$ etc). Zur besseren Unterscheidung zu den Vorzeichen sign($\cdot$) (aus der Menge $\{-1,+1\}$) werden die Namen der Binärsignale (aus der Menge $\{0,1\}$) groß geschrieben. Tabelle 1 gibt eine Übersicht über die Bedeutung und die Codierung aller im Entscheider 2 gemäß Fig. 6 vorkommenden Binärsignale.

| Binärsignal | Interpretation | Codierung |
|---|---|---|
| $V$ | Vorzeichenbit von $y_n$ | 0 f. $y_n > 0$ bzw. $\text{sign}(\bar{a}_n) > 0$<br>1 f. $y_n < 0$ bzw. $\text{sign}(\bar{a}_n) < 0$ |
| $U$ | Überlaufbit von $y_n$ | 0 f. Überlauf und $y_n < 0$<br>1 f. Überlauf und $y_n > 0$ |
| $T_1, T_2, T_3$ | kennzeichnen zusammen mit V in jeder Achse eines der $\sqrt{256} = 16$ möglichen Sendesymbole $\bar{a}_n$ | |
| $E$ | Fehlerbit | 0 f. $\text{sign}(e_n/\infty\text{-QAM}) < 0$<br>1 f. $\text{sign}(e_n/\infty\text{-QAM}) > 0$ |
| $E/256\text{-QAM}$ | Fehlerbit für die Adaption der Nebenkoeffizienten | 0 f. $\text{sign}(e_n/256\text{-QAM}) < 0$<br>1 f. $\text{sign}(e_n/256\text{-QAM}) > 0$ |
| $E/324\text{-QAM}$ | Fehlerbit für die Adaption des *reference taps* | 0 f. $\text{sign}(e_n/324\text{-QAM}) < 0$<br>1 f. $\text{sign}(e_n/324\text{-QAM}) > 0$ |
| $I_+/256\text{-QAM}$ | Indikator für positive Bereichs-überschreitung bei 256-QAM | 0 f. $y_n <$ pos. 256-QAM Schranke<br>1 f. $y_n >$ pos. 256-QAM Schranke |
| $I_-/256\text{-QAM}$ | Indikator für negative Bereichs-überschreitung bei 256-QAM | 0 f. $y_n <$ neg. 256-QAM Schranke<br>1 f. $y_n >$ neg. 256-QAM Schranke |
| $I_+/324\text{-QAM}$ | Indikator für positive Bereichs-überschreitung bei 324-QAM | 0 f. $y_n <$ pos. 324-QAM Schranke<br>1 f. $y_n >$ pos. 324-QAM Schranke |
| $I_-/324\text{-QAM}$ | Indikator für negative Bereichs-überschreitung bei 324-QAM | 0 f. $y_n <$ neg. 324-QAM Schranke<br>1 f. $y_n >$ neg. 324-QAM Schranke |
| $A/256\text{-QAM}$ | Ergebnis der binären Korrelation für Nebenkoeffizienten | 0 f. $\text{sign}(e_n/256\text{-QAM}) \cdot \text{sign}(\bar{a}_n) > 0$<br>1 f. $\text{sign}(e_n/256\text{-QAM}) \cdot \text{sign}(\bar{a}_n) < 0$ |
| $A/324\text{-QAM}$ | Ergebnis der binären Korrelation für *reference tap* | 0 f. $\text{sign}(e_n/324\text{-QAM}) \cdot \text{sign}(\bar{a}_n) > 0$<br>1 f. $\text{sign}(e_n/324\text{-QAM}) \cdot \text{sign}(\bar{a}_n) < 0$ |

Tabelle 1: Bedeutung und Codierung der Binärsignale

Zunächst sind Indikatoren bereitzustellen, die eine Über- oder Unterschreitung des zulässigen QAM-Signalwertbereichs anzeigen. Dafür gilt zur Fehlersignalbehandlung für die Adaption der Nebenkoeffizienten

$$I_+/256 - \text{QAM} = \overline{V} \wedge U \quad (6)$$
$$I_-/256 - \text{QAM} = \overline{V} \wedge U, \quad (7)$$

und zur Fehlerbehandlung für die Adaption des Hauptkoeffizienten

$$I_+/324 - \text{QAM} = I_+/256 - \text{QAM} \wedge (T_1 \vee T_2 \vee T_3) \quad (8)$$
$$I_-/324 - \text{QAM} = I_-/256 - \text{QAM} \vee (T_1 \wedge T_2 \wedge T_3). \quad (9)$$

Die Fehlerbits zur binären Korrelation werden dann wie folgt gebildet:

$$E/256 - \text{QAM} = I_+/256 - \text{QAM} \vee [I_-/256 - \text{QAM} \wedge E] \quad (10)$$
$$E/324 - \text{QAM} = I_-/324 - \text{QAM} \vee [I_-/324 - \text{QAM} \wedge E]. \quad (11)$$

Die Korrekturwertbildungen $\text{sign}(e_n^*) \cdot \text{sign}(\bar{a}_{n-i})$ sind nun auf einfache Weise durch EXOR-Verknüpfungen der Vorzeichenbits *V* mit den Fehlerbits *E*/256-QAM und *E*/324-QAM möglich:

$$A/256 - \text{QAM} = V \otimes E/256 - \text{QAM} \quad (12)$$
$$A/324 - \text{QAM} = V \otimes E/324 - \text{QAM}. \quad (13)$$

*A*/256-QAM und *A*/324-QAM sind die Ergebnisse der binären Korrelation und stellen somit gemäß Tabelle 1 die gewünschten Korrekturwerte dar. Bei der Adaption der Nebenkoeffizienten sind zur Bildung der Korrekturwerte $A_{n-i}$/256-QAM i= -$I$... +$I$, i≠0 für die Vorzeichenbits und Fehlerbits noch entsprechende Verzögerungsglieder mit der Verzögerungszeit T im Korrelator 3 vorzusehen, wie die Fig. 7 zeigt. Mit dem Symbol ⊗ sind hier EXOR-Gatter bezeichnet.

In dem für den Hauptkoeffizienten des Entzerrers zuständigen Korrelator 4 findet, wie in Fig. 8 dargestellt, die EXOR-Verknüpfung gemäß Gleichung (13) statt.

## Patentansprüche

1. Verfahren, nach dem bei einer Übertragung eines quadraturamplitudenmodulierten Signals (QAM-Signal), solange die Trägerfrequenz eines QAM-Empfängers noch nicht auf die Trägerfrequenz des QAM-Empfängersignals eingerastet ist, die Koeffizienten eines zum Empfänger gehörenden Entzerrers bestimmt werden, indem jeder i-te (i=...-2, -1, 0, 1, 2, ...) Koeffizient aus seinem zeitlich vorhergehenden Wert durch Überlagerung mit einem Korrekturwert gebildet wird, wobei das Vorzeichen des Korrekturwertes aus dem Produkt des Vorzeichens des von einem Entscheider geschätzten am wahrscheinlichsten gesendeten Signalwertes und des Vorzeichens des vom Entscheider ermittelten Schätzfehlers gebildet wird, der die Ablage des tatsächlich empfangenen Signalwertes von dem geschätzten gesendeten Signalwert wiedergibt, dadurch gekennzeichnet,
daß bei der für die Herleitung des Vorzeichens des Korrekturwertes für den Hauptkoeffizienten (i=0) des Entzerrers (1) erforderlichen Ermittlung des Schätzfehlers die möglichen Signalwerte einer Quadraturamplitudenmodulation zugrundegelegt werden, die höherwertiger ist als die sendeseitig angewendete Quadraturamplitudenmodulation.

2. Verfahren nach Anspruch 1, dadurch gekennzeichnet, daß bei der für die Herleitung des Vorzeichens des Korrekturwertes für die Nebenkoeffizienten (i≠0) des Entzerrers (1) erforderlichen Ermittlung des Schätzfehlers ein Signalwertevorrat derselben Quadraturamplitudenmodulation wie sendeseitig zugrundegelegt wird.

3. Verfahren nach Anspruch 1, dadurch gekennzeichnet,
daß bei einer sendeseitig angewendeten $M^2$-QAM-Modulation im Empfänger für die Ermittlung des Schätzfehlers von einer (M+N$^2$-QAM-Modulation ausgegangen wird, wobei N(2, 4, 6...) so gewählt ist, daß der mittlere Korrekturwert für den Hauptkoeffizienten gerade nicht negativ wird.

4. Verfahren nach Anspruch 3, dadurch gekennzeichnet, daß bei einer sendeseitig angewendeten 256-QAM im Empfänger für die Ermittlung des Schätzfehlers von einer 324-QAM ausgegangen wird.

## Claims

1. A method in which during the transmission of a quadrature-amplitude-modulated signal (QAM signal), as long as the carrier frequency of a QAM receiver has not locked in on the carrier frequency of a QAM receiver signal, the coefficients of a distortion corrector which is part of the receiver are determined in that each i-th (i=...- 2, -1, 0, 1, 2, ...) coefficient is formed from its time value by superimposing a correction value on it, wherein the sign of the correction value is formed from the product of the sign of a signal value, which has been estimated by a decision device to have been most likely transmitted, and of the sign of the estimation error determined by the decision device which represents the deviation of the actually received signal value from the estimated transmitted signal value, characterized in that
in the course of the determination of the estimation error required for deriving the sign of the correction value for the main coefficient (i=o) of the distortion corrector (1), those possible signal values of a quadrature-amplification modulation are made the basis which have a higher value than the quadrature-amplification modulation employed at the transmitter end.

2. A method in accordance with claim 1, characterized in that a signal value reserve of the same quadrature-amplification modulation as that on the transmitter end forms the basis in the course of the determination of the estimation error required for deriving -the sign of the correction value for the auxiliary coefficients (i≠o) of the distortion corrector (1).

3. A method in accordance with claim 1, characterized in that in case of an $M^2$-QAM-modulation employed at the transmitting end, the basis for determining the estimation error in the receiver is an $(M+N)^2$-QAM modulation, wherein N (2, 4, 6 ...) is selected such that the average correction value for the main coefficient just misses becoming negative.

4. A method in accordance with claim 3, characterized in that in case of 256-QAM employed at the transmitter, the basis for determining the estimation error in the receiver is 324-QAM.

## Revendications

1. Procédé, selon lequel, lors d'une transmission d'un signal modulé en amplitude avec déphasage en quadrature (signal à QAM), aussi longtemps que la fréquence porteuse d'un récepteur à QAM n'est pas encore accrochée sur la fréquence porteuse du signal de récepteur à QAM, les coefficients d'un égalisateur appartenant au récepteur sont déterminés, dans lequel, chaque ième (i = ... -2, -1, 0, 1, 2, ...) coefficient est formé, à partir de sa valeur temporaire antérieure, par superposition avec une valeur de correction, le signe de la valeur de correction étant formé à partir du produit du signe de la valeur de signal envoyé par un dispositif de décision, évaluée le plus probablement, et du signe de l'erreur d'évaluation déterminée par le dispositif de décision, qui redonne le dépôt de la valeur de signal réceptionnée effectivement, de la valeur de signal envoyée, évaluée, caractérisé en ce que, lors de la détermination de l'erreur d'évaluation requise pour la déduction du signe de la valeur de correction pour le coefficient principal (i = 0) de l'égalisateur (1), les valeurs de signal possibles sont à la base d'une modulation en amplitude avec déphasage en quadrature, qui est de valeur plus élevée que la modulation en amplitude avec déphasage en quadrature employée côté émission.

2. Procédé selon la revendication 1, caractérisé en ce que, lors de la détermination de l'erreur d'évaluation requise pour la déduction du signe de la valeur de correction pour les coefficients secondaires (i ≠ 0) de l'égalisateur (1), une réserve de valeurs de signal est à la base de la même modulation en amplitude avec déphasage en quadrature que du côté émission.

3. Procédé selon la revendication 1, caractérisé en ce que, lors d'une modulation à $M^2$-QAM employée côté émission dans le récepteur, pour la détermination de l'erreur d'évaluation, on part d'une modulation à QAM-$(M+N)^2$, N(2, 4, 6...) étant ainsi choisi, que la valeur de correction moyenne pour le coefficient principal ne devient justement pas négative.

4. Procédé selon la revendication 3, caractérisé en ce que, lors d'une modulation QAM-256 employée côté émission dans le récepteur, pour la détermination de l'erreur d'évaluation, on part d'une modulation QAM-324.

Fig. 1

Fig. 2

Fig. 3

Fig. 4

Fig. 6

Fig. 5

Fig. 7

Fig. 8